# EUROPEAN PATENT SPECIFICATION

(11) **EP 1 383 394 B1**
(45) Date of publication and mention of the grant of the patent: **24.05.2006**
(21) Application number: 02764115.8
(22) Date of filing: 19.04.2002
(51) Int. Cl.: A23J 3/34, A23C 9/127, A23C 19/055, A23C 20/00, A23J 1/12, A23J 1/20, A23L 1/23, A23C 19/028

(54) **METHOD OF PREPARING SAVOURY-FLAVOURED PRODUCTS BY FERMENTATION OF PROTEINS**
VERFAHREN ZUR HERSTELLUNG VON PIKANT SCHMECKENDEN PRODUKTEN DURCH FERMENTATION VON PROTEINEN
PROCEDE DE PREPARATION DE PRODUITS SALES PAR FERMENTATION DE PROTEINES

(30) Priority: 19.04.2001 NZ 51120201
(43) Date of publication of application: 28.01.2004
(73) Proprietor: NEW ZEALAND DAIRY BOARD, Wellington 6001 (NZ)
(72) Inventor: SCHLOTHAUER, Ralf-Christian, 25924 Emmelsbuell (DE); CARROLL, Tim, PALMERSTON NORTH (NZ); DAVEY, Graham Peter, PALMERSTON NORTH (NZ); CHAN, Jessie Rose, WELLINGTON (NZ)
(74) Representative: Brown, John D.
(86) International application number: PCT/NZ2002/000067
(87) International publication number: WO 2002/085131

(56) References cited:
- EP-A- 0 486 776
- GB-A- 1 240 345
- US-A- 3 156 568
- US-A- 3 650 768
- US-A- 4 172 900
- US-A- 4 315 946
- US-A- 4 675 193
- US-A- 6 020 009
- DATABASE FSTA [Online] XP002971952 Database accession no. 1986(07):S0110 & CANTONI C. ET AL: 'Microbiologia ebiochimica della maturazione degli insaccati.' RISTORAZIONE COLLETTIVA vol. 10, no. 6, 1985, pages 87 - 95
- DATABASE WPI Week 199811, Derwent Publications Ltd., London, GB; AN 1998-118781, XP002973034 & RU 2 083 665 C (MEAT IND RES INST)

## Description

### Technical Field

This invention relates to a method for preparing a savoury-flavoured product from the fermentation of a source of protein. In one particularly preferred embodiment the invention relates to a savoury -flavoured concentrate made from the fermentation of a milk or milk derivative using food grade bacteria.

### Background Art

It is known in the art to ferment a protein based medium with selected lactic acid bacteria. The medium may be milk or a milk derivative, although other protein sources may be used. The lactic acid so produced reduces pH, thereby imparting an improved keeping quality. Traditionally the fermentation is carried out under conditions which produce acidic flavours. Examples include cultured milk drinks, yoghurt and soy bean protein products.

It is also known in the art to alter the traditional cheese-making process to accelerate the development of desired cheese flavours. This reduces the time from production of the cheese to market The curd produced by enzyme and/or acid-precipitation of milk has a bland flavour until the proteins (and fats) in the curd have been partially hydrolysed. Traditionally these processes may take several months under the action of the residual enzymes or enzyme-expressing bacteria active in the curd. However it is known to accelerate these processes by inoculating cheese slurries or cheese curd with enzyme preparations or microorganisms. In particular, it is known from US 3,689,286 to accelerate the development of cheddar cheese type flavour by inoculating the curd with a strain of Micrococcus bacteria. It is also known from US 3,650,768 to make an American-type cheese by inoculating milk with both a strain of Micrococcus bacteria and a lipase enzyme before the addition of a lactic-acid producing cheese-starter bacteria.

It is known to produce cheese flavour by sequentially fermenting a flavour-development medium with a lipase/protease-producing microorganism, followed by a lactic acid bacteria, as described in US 4,675,193.

It is also known to produce savoury flavours by fermentation of vegetable or cereal protein with yeast, moulds and/or bacteria or by enzymatic hydrolysis. In the example of soy sauce, the traditional, time-consuming method is to ferment the protein substrate with a koji mould culture, followed by a bacterial/yeast fermentation in which lactic acid and ethanol are produced. The fermented material is then heated to generate the characteristic colour and flavour (Savoury Flavours, T.W. Nagodawithana, Esteekay Accociates Inc. 1995). The mould fermentation produces enzymes that hydrolyse the protein. The traditional process can take several months, but savoury-flavour production can be accelerated by hydrolysing protein using commercial enzyme preparations rather than by fermenting with an enzyme-producing microorganism or to use both commercial enzyme preparations and microorganisms (for example see WO 98/17127 and WO 00/62624).

Fermentation with lactic acid bacteria is also known to impart improved flavour or to accelerate flavour development in meat products, for example as described in US 3,193,391, US 6,063,410 and DE 1692174.

Furthermore, it is known from US 4,001,437 to generate a desired meat flavour from the product of a milk protein-hydrolysis by heating to a temperature above 90°C. However, a meat flavour can be produced without heating by solid fermentation of a plant source of protein with lactic acid bacteria (EP 106236) or a combination of a koji culture with cooked-meat microorganisms (US 6,020,009).

In EP 486776 there is described a fermentation process for making well-rounded flavours for improving or intensifying the taste and aroma of foods. The process involves the fermentation of a medium containing natural substrates inoculated with a strain of *Monascus purpureus.* In a preferred embodiment the fermentation can contain, in addition, strains of *Brevibacterium linens* and *Lactobaccillus casei.* The natural substrates can include bread flour or whole milk powder.

Both US 4,172,900 and US 1,240,345 describe processes for obtaining a natural cheese product having higbly intensified American cheese flavour. The process involves the use of a lipase protease, preferably from throat tissue, and a protease from a strain of *micrococcus* bacteria.

US 3,156,568 describes a method for manufacturing a low fat ripened cheese. The method includes inoculating cheese milk with a starter culture and a microorganism. The flavour of the cheese is enhanced by the addition of a lipase prior to renneting of the cheese milk.

In Russian specification RU 109757 there is described a method for producing a bacterial composition which consists of separately culturing lactobacteria and micrococci of generation I and 2 and combining these with biomass to give an extended storage life to products. An example of a product whose storage life may be enhanced is a meat product There is no indication as to what effect, if any, the composition has on the flavour of the meat.

We have discovered that we can produce a savoury-flavoured product in a relative short period of time by fermentation of an aqueous protein-based medium by food-grade bacteria under different conditions from those traditionally used. The product thereby produced may be concentrated to produce a product which may be used as an additive to add flavour to other consumer products such as cheese.

It is an object of this invention to achieve this desideratum or at least to offer the public a useful choice.

### Disclosure of the Invention

Accordingly, the invention may be said broadly to consist in a method for preparin a savoury-flavoured product from a source of protein characterized in that it comprises:
fermenting said source of protein in a physiologically acceptable aqueous medium containing at least one first food grade strain of bacterium selected from the genus *Macroccoccus,* and at least one second food grade strain of lactic acid bacterium at a temperature of from 20-42°C at a pH maintained in excess of the isoelectric point of said medium,
continuing said fermentation until a sufficient degree of hydrolysis has been reached so that said savoury flavour has been achieved and recovering the product so produced, with the proviso that isolated casein or a derivative thereof is not the sole source of protein.

More preferably said *Macrococcus* strain is a strain of *Macrococcus caseolyticus.* Most preferably said strain of *Macrococcus caseolyticus* is either of the strains deposited in the American Type Culture Collection under ATCC#51834 and ATCC#51835 [Int. J. Syst. Bacteriol. 48:859-877, 1998]. Freeze dried cultures are available for purchase from the ATCC.

Preferably said second strain is selected from the group consisting of a strain of *Lactobaccillus,* a strain of *Lactococcus,* a strain of *Pediococcus,* and a strain of *Leuconostoc* bacteria.

More preferably said second strain is selected from the group consisting of a strain of *L. helveticus,* a strain of *L. delbrueckii* subsp. *bulgaricus,* a strain of *L. delbrueckii* subsp. *lactis,* a strain of *L. brevis,* a strain of *L. paracaseii,* a strain of *L. rhamnosus* and a strain of *L. fermentum.*

Most preferably said second strain is a strain of *Lactobacillus helveticus.*

Preferably said sufficient degree of hydrolysis is from 2% to 32%.

More preferably said sufficient degree of hydrolysis is from 4% to 32%.

Most preferably said sufficient degree of hydrolysis is from 7% to 32%.

Preferably said pH is so maintained by the addition of a physiologically acceptable base or buffer.

Preferably said base is potassium hydroxide.

Alternatively said base is sodium hydroxide.

Alternatively said base is calcium hydroxide.

### Preferably said source of protein is a milk and/or a milk derivative

Preferably said milk is selected from the group consisting of whole milk, homogenized whole milk, skim milk, reconstituted skim milk powder and reconstituted whole milk powder.

Preferably said milk derivative is selected from the group consisting of milk protein concentrate (MPC), whey protein concentrate (WPC), calcium-depleted milk derivatives, buttermilk, whey and ultrafiltration permeates.
Preferably the reconstituted powder or slurry is less than 50% total solids.

Alternatively said source of protein in a physiologically acceptable medium is vegetable or cereal protein.

Preferably said vegetable protein is soy bean protein.

Alternatively said cereal protein is rice or wheat protein.

Preferably said physiologically acceptable medium contains added or native carbohydrate.

In the preferred embodiment said carbohydrate is lactose.

In another embodiment said carbohydrate is glucose, fructose, maltose, sucrose, an oligosaccharide or starch, or a blend of any two or more thereof.

In another embodiment the medium contains cream, cream powder or butter fat.

In a further embodiment the medium contains a non-dairy fat.

Preferably the non-dairy fat is a source of polyunsaturated fatty acid such as olive oil, canola oil or safflower oil.

Alternatively the non-dairy fat is coconut oil.

Preferably the fermentation is conducted at a pH of between 4.0 and 8.0

Most preferably pH is 5.5-6.5

In one embodiment said fermentation is conducted at pH stat conditions.

Preferably the fermentation is conducted at a temperature of 15-45°C.

Most preferably the temperature is 30-40°C

Preferably said first or second strains of bacteria are added to said medium together.

Alternatively, said first or second strains are added separately at different times, and the temperature and pH at which the fermentation is conducted may be changed after the second or subsequent strains are added.

Preferably the fermentation is continued for from 12 to 96 hours.

Most preferably the fermentation is conducted for about 40-60 hours.

In one embodiment the fermentation is separated into an acid production and a flavour development stage.

In one alternative the pH is changed during said flavour development stage.

In another alternative the temperature is changed during said flavour development stage.

In yet another alternative cells are ruptured to release intracellular enzymes during the flavour development stage.

Preferably the cells are ruptured osmotically by neutralisation of added base.

Alternatively the cells are ruptured by addition of lysosyme.

Alternatively the cells are ruptured by shear.

In a further alternative, hydrolytic enzymes are added in the flavour development stage.

Preferably, lipases or proteases are added.

Alternatively, ruptured cells are added.

In one embodiment growth-enhancing substances are added to the medium.

Preferably protein hydrolysates are added.

In one alternative said fermentation is terminated before said savoury flavoured product is recovered.

Preferably said fermentation is terminated by inactivating said strains of bacteria.

Alternatively said fermentation is terminated by removing said strains of bacteria.

Preferably said strains of bacteria are inactivated by heating.

In another alternative, the microorganisms are harvested and reinoculated into a fresh medium for subsequent flavour development fermentation.

In one embodiment cellular matter from said inactivated strains of bacteria is added to fresh medium for a subsequent flavour development fermentation.

In another embodiment the enzymes that are produced by said strains of bacteria are isolated and added into fresh medium for subsequent flavour development.

In another embodiment enzymes either produced by said strains of bacteria or added for flavour development are deactivated before product recovery.

Preferably said enzymes are deactivated by heating to a minimum temperature of 72°C for at least 15 minutes..

In one embodiment said recovered flavoured product is concentrated.

Preferably concentration is by drying.

In one alternative the concentration is by evaporation.

Alternatively the concentration is by centrifugation.

Alternatively the concentration is by membrane filtration.

In one embodiment the fermented product is heat-treated to develop desired flavours.

In another embodiment the fermented product is aged to develop desired flavours.

In a further embodiment the product is blended with other ingredients to produce the desired final product.

Preferably the desired final product formulation is achieved by blending before concentration.

Alternatively the final product formulation may be achieved by blending the dried product with the desired ingredients.

In one embodiment the fermentation or fermented product is partially desalted.

Preferably desalting is by nanofiltration.

Alternatively desalting is by electrodialysis.

Alternatively microfiltration is performed before electrodialysis.

In another alternative ultrafiltration is performed before electrodialysis.

The invention also includes the additional step of adding the product recovered from the said process to a cheese making process to provide flavour to the cheese to be produced thereby.

In another aspect the invention includes the additional step of adding the product recovered from the said process to a recombined product to provide flavour to the product to be produced thereby.

Preferably said recombined product is selected from the group consisting of protein- water gels, yoghurts, creams, custards, sauces and confectionary products.

In another embodiment the invention may be said to be a savoury-flavoured product produced by the method as defined above.

In a still further embodiment the invention consists in a cheese containing a savoury product as described above.

In another aspect the invention includes a recombined product containing a savoury flavoured product produced by the method as defined above.

In one embodiment said product is provided in the form of a powder.

In another embodiment said product is in the form of a paste

In yet another embodiment said product is in the form of a slurry.

The invention may also be said to consist in a method for preparing a savoury-flavoured product substantially as herein described with reference to any example thereof.

Alternatively the invention consists in a savoury-flavoured product prepared by a method substantially as herein described with reference to any example thereof.

Although the method of the invention claimed contemplates the presence of at least one first strain and one second strain of the identified bacteria it should be understood that strains of other bacteria may be added to the fermentation medium.
This invention may also be said broadly to consist in the parts, elements and features referred to or indicated in the specification of the application, individually or collectively, and any or all combinations of any two or more of said parts, elements or features, and where specific integers are mentioned herein which have known equivalents in the art to which this invention relates, such known equivalents are deemed to be incorporated herein as if individually set forth.

### BRIEF DESCRIPTION OF THE DRAWING

The invention may also be understood by having reference to the accompanying drawing wherein:

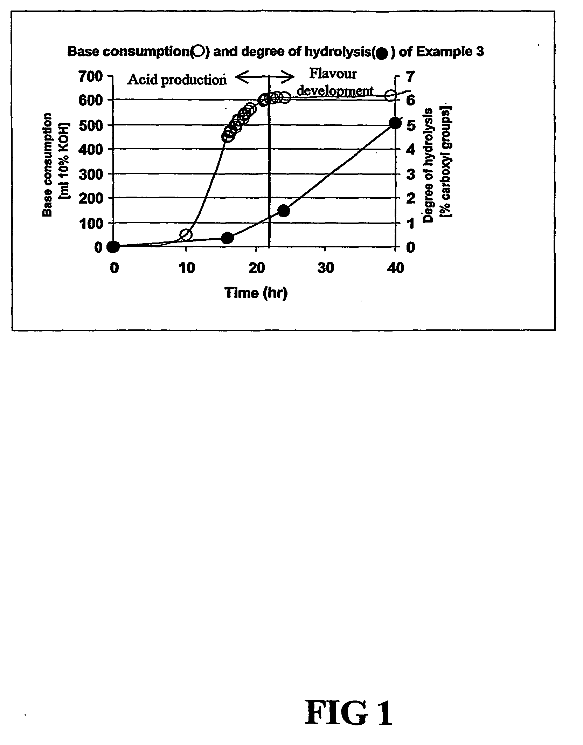

Figure 1 is a plot showing the consumption of base by the bacteria against time and the degree of hydrolysis against time for the reaction described below in example 3.

### MODES OF CARRYING OUT THE INVENTION

The invention may be more fully understood by having reference to the following examples.

### Example 1: Savoury Flavour from Whole Milk

*Lactobacillus helveticus* and *Macroccocus caseolyticus* were grown overnight at 10L in two separate fermenters of Yeast Glucose Milk, under pH control at 6.1 with ammonium hydroxide neutralization in a milk based medium. 2L of a pasteurised reconstituted whole milk powder was made up to 10% total solids with water and inoculated with 3 mL each of 10⁹ cfu/mL *Lactobacillus helveticus* and *Macroccocus caseolyticus* pure cultures at 37°C. The pH was allowed to drop from 6.6 to 6.0 before being maintained at 6.0 by the addition of a 10% KOH solution. The medium was fermented for 48 hours to a degree of hydrolysis of 18% (method as described by H. Frister et al., in Fresenius Zeitschrift Analytik Chimie, 330:631-633, 1988). The fermentation was terminated by adjusting the pH back to 6.6 followed by heating to 60°C and holding for 30min. The product was concentrated by freeze-drying. Rice and water crackers coated with olive oil and melted butter were dusted with the freeze-dried product and baked at 100°C until the powder browned.

A panel of experienced cheese-tasters was convened to devise flavour descriptors for the pre-concentrated product produced by the method described in this example. This was initially done individually, after which a final list of descriptors and their relative intensity was agreed by discussion and consensus. The agreed primary flavour descriptors were savoury, meaty, roast, brothy, mushroom and salty. Products from subsequent examples were compared to this reference example product.

### Example 2: Savoury Flavour from Whole Milk Powder

*Lactobacillus helveticus* and *Macroccocus caseolyticus* were grown overnight at 10L in two separate fermenters of Yeast Glucose Milk, under pH control at 6.1 with ammonium hydroxide neutralization in a milk based medium. The media of 93 kg of whole milk powder in 930 kg of demineralised water was heated to 54°C and then partially hydrolysed with 0.5L neutrase for 90 min, after which the enzyme was deactivated by heating to 85°C. The medium was then UHTST-sterilised, cooled to 37°C and inoculated. The pH was maintained at 6.0 by the addition of a 20L of 49% KOH solution. The pH was then reduced to 4.6 before control at 6.0 was re-established at 24 hours. A further 8L of 50% KOH was added from 24 to 48 hrs. The fermentation was terminated by heating to 60.5°C and holding for 30min. 9kg of milk protein concentrate was added to 90L of the fermented product to bring the total solids up to 20% and the resulting mixture was spray-dried at an air inlet temperature of 175°C and an exhaust temperature of 80°C.

Although not tasted by a formal panel, the flavour was comparable to that of example 1.

### Example 3: Savoury Flavour from Skim Milk Powder

An inoculum was prepared as for Example 1. 180g of a pasteurised reconstituted skim milk powder was made up to 10% total solids with water. 20mL of 20% lactose solution (0.45µm filtered) was added. The medium was inoculated with 3 mL each of 10⁹ cfu/mL *Lactobacillus helveticus* and *Macroccocus caseolyticus* pure cultures at 37°C. The pH was allowed to drop from 6.6 to 6.0 before being maintained at 6.0 for the fermentation by the addition of a 10% KOH solution. The medium was fermented for 40 hours to a degree of hydrolysis of 5%. The fermentation was terminated by adjusting the pH back to 6.6 followed by heating to 60°C and holding for 30min. The savoury flavour was less intense than from Example 1, although strong brothy and roast notes were evident.

The line plotted by the circles in Figure 1 shows the activity of the combined cultures of *Lactobacillus helveticus* and *Macroccocus caseolyticus*. Over the first 24 hours of the fermentation, the cultures are actively growing, consuming lactose and producing lactic acid, which is neutralised to salt by adding base (termed the acid production stage). The open symbols show the base consumption over time. Eventually after sufficient lactose consumption and salt production, growth becomes inhibited, cell numbers stop increasing and the enzymes they produce hydrolyse the proteins to produce the desired flavour substances (termed the flavour development stage). The solid symbols show the degree of hydrolysis over time.

### Example 4 - Savoury Flavour from Whey Protein Concentrate

An inoculum was prepared as for Example 1. 2L of a pasteurised whey protein concentrate solution was made up as 10% whey protein concentrate and 3% lactose in water and the medium was inoculated with 3 mL each of 10⁹ cfu/mL *Lactobacillus helveticus* and *Macroccocus caseolyticus* pure cultures at 37°C. The medium was fermented for 40 hours to a degree of hydrolysis of 4.6%. The pH was maintained at 6.0 for the fermentation by the addition of a 10% KOH solution. The fermentation was terminated by adjusting the pH back to 7.0 followed by heating to 60°C and holding for 30min.

The flavour was relatively musty with a moderately brothy note.

### Example 5: Savoury Flavour from Soy Protein Isolate

2L of acid whey was made up to 10% total solids with soy protein isolate. An inoculum was prepared as for Example 1. The medium was heated to 37°C and inoculated with 3 mL each of 10⁹ cell/mL *Lactobacillus helveticus* and *Macroccocus caseolyticus* pure cultures. The medium was fermented for 48 hours. The pH was allowed to drop from 6.6 to 6.0 before being maintained at 6.0 for the fermentation by the addition of a 10% KOH solution. The fermentation was terminated by heating to 60°C and holding for 30min. The flavour was both savoury and cereal.

### Example 6: Savoury Flavour from Whole Milk Powder

An inoculum was prepared as for Example 1. 2L of a pasteurised reconstituted whole milk powder was made up to 10% total solids with water and inoculated with 3 mL each of 10⁹ cfu/mL *Lactobacillus helveticus* and *Macroccocus caseolyticus* pure cultures at 37°C. The medium was fermented for 24 hours to a degree of hydrolysis of 20%. The pH was allowed to drop from 6.6 to 6.0 before being maintained at 6.0 by the addition of a 10% KOH solution.

10g of lysozyme was added to the medium after 24 hours and the pH was thereafter maintained at 5.2. The fermentation was terminated by adjusting the pH back to 6.6 followed by heating to 60°C and holding for 30min.

The flavour was similar to that of Example 1, although the roast note was more subdued, and a stronger mushroom note was evident.

### Example 7: Fermentation with only one bacterium from first group (Control Example)

An inoculum was prepared as for Example 1. 2L of a pasteurised reconstituted skim milk powder was made up to 10% total solids with water. The medium was inoculated with 3 mL of 10⁹ cfu/mL *Macrococcus caseolyticus* culture at 37°C. The pH was allowed to drop from 6.6 to 6.0 before being maintained at 6.0 for the fermentation by the addition of a 10% KOH solution. The medium was fermented for 47 hours to a degree of hydrolysis of 5.5%. The fermentation was terminated by adjusting the pH back to 6.6 followed by heating to 60°C and holding for 30 min.

This fermentation produced undesirable off-flavours that were considerably different from the earlier examples.

### Example 8 : Fermentation with only one bacterium from second group (Control Example)

An inoculum was prepared as for Example 1. 2L of a pasteurised reconstituted skim milk powder was made up to 10% total solids with water. The medium was inoculated with 3 mL of 10⁹ cfu/mL *Lactobacillus helveticus* culture at 37°C. The pH was allowed to drop from 6.6 to 6.0 before being maintained at 6.0 for the fermentation by the addition of a 10% KOH solution. The medium was fermented for 49 hours to a degree of hydrolysis of 8.8%. The fermentation was terminated by adjusting the pH back to 6.6 followed by heating to 60°C and holding for 30min.

The flavour was significantly different from those produced in Examples 1-6. The *Lactobacillus helveticus* alone produced an acidic and sour flavour that was substantially less savoury than that of Example 1.

### Example 9 : Fermentation of unsuitable protein substrate (control example)

The inoculum was prepared as for Example 1.2L of a pasteurised calcium caseinate solution was made up to 10% total solids with water. 3% lactose was added and the medium was inoculated with 3 mL each of 10⁹ cfu/mL *Lactobacillus helveticus* and *Macroccocus caseolyticus* pure cultures at 37°C. The medium was fermented for 40 hours to a degree of hydrolysis of 2.5%. The pH was maintained at 6.0 for the fermentation by the addition of a 10% KOH solution. The fermentation was terminated by adjusting the pH back to 7.0 followed by heating to 60°C and holding for 30min.

This product was intensely bitter in flavour.

### Example 10: Savoury Flavour from Whole Milk Powder with Three Bacterial Strains

2L of a pasteurised reconstituted whole milk powder was made up to 10% total solids with water. The medium was inoculated with 3 mL each of 10⁹ cfu/mL *Lactobacillus bulgaricus, Enterococcus faecalis (EFT) and Macrococcus caseolyticus* strains at 37°C. The medium was fermented for 48 hours. The pH was allowed to drop from 6.6 to 6.0 before being maintained at 6.0 for the fermentation by the addition of a 10% KOH solution. The fermentation was terminated by adjusting the pH back to 6.6 followed by heating to 60°C and holding for 30min.

This product had a cheese flavour, although considerably less savoury flavour than that of Example 1.

### Example 11: Savoury Flavour from Whole Milk Powder with added Enzyme

An inoculum was prepared as for Example 1. 2L of a pasteurised reconstituted whole milk powder was made up to 10% total solids with water and inoculated with 3 mL each of 10⁹ cfu/mL *Lactobacillus helveticus* and *Macroccocus caseolyticus* pure cultures at 37°C. The pH was allowed to drop from 6.6 to 6.0 before being maintained at 6.0 for the fermentation by the addition of a 10% KOH solution. The medium was fermented for 24 hours after which 500mLs was removed, and 0.1% Palatase^{™} enzyme and ethanol (to 0.1M) were added. The fermentation was then continued for a further 24 hours.

This product had a savoury and soapy flavour.

### Example 12: Savoury flavour from pasteurised whole milk

The inoculum was prepared as for Example 1. 2L of pasteurised whole milk was inoculated with 3 mL each of 10⁹ cfu/mL *Lactobacillus helveticus* and *Macroccocus caseolyticus* pure cultures at 37°C. The pH was allowed to drop from 6.6 to 6.0 before being maintained at 6.0 for the fermentation by the addition of a 10% KOH solution. The fermentation was terminated after 48 hours.

This product was similar in flavour to that of Example 1, although the savoury note was slightly less intense.

### Example 13: Savoury Flavour from Whole Milk using ATCC strain #51834

*Lactobacillus helveticus* was prepared as described in Example 1. *Macroccocus caseolyticus* (ATCC#51834) was grown in 10% reconstituted skim milk at 37°C for 16-18 hours. 2L of a pasteurised reconstituted whole milk powder was made up to 10% total solids with water and inoculated with 3 mL of approximately 10⁹ cfu/mL *Lactobacillus helveticus,* and approximately 8-16mL of *Macroccocus caseolyticus* pure cultures at 37°C. The pH was allowed to drop from 6.6 to 6.0 before being maintained at 6.0 by the addition of a 10% KOH solution. The medium was fermented for 48 hours. The fermentation was terminated by heating to 60°C and holding for 30min.

This product was similar in flavour to Example 1, although the savoury flavour was less intense, and the mushroom flavour was more intense.

### Example 14: Savoury Flavour from Whole Milk using ATCC strain #51835

*Lactobacillus helveticus* was prepared as described in Example 1. *Macroccocus caseolyticus* (ATCC#51834) was grown in 10% reconstituted skim milk at 37°C for 16-18 hours. 2L of a pasteurised reconstituted whole milk powder was made up to 10% total solids with water and inoculated with 3 mL of approximately 10⁹ cfu/mL *Lactobacillus helveticus,* and approximately 8-16mL of *Macroccocus caseolyticus* pure cultures at 37°C. The pH was allowed to drop from 6.6 to 6.0 before being maintained at 6.0 by the addition of a 10% KOH solution. The medium was fermented for 48 hours. The fermentation was terminated by heating to 60°C and holding for 30min.

This product was very close in flavour to Example 1.

### Additional Comments

The strong tendency of casein protein to form bitter-tasting protein hydrolysates is well known, and nearly all of the development work on casein hydrolysis processes has centred around the bitterness problem [J. Adler-Nissen,. Enzymatic Hydrolysis of Food Proteins, Elsevier, 1986 and references therein]. It was not surprising that an isolated caseinate fermented as described by the process of the invention produced an intensely bitter flavour and no savoury notes as described by the panel (Example 9). However it was surprising that bitterness was avoided when the other protein substrates containing at least some casein were fermented by the same method.

The savoury-flavoured product produced as described has the advantage over existing processes in that a heating step is not required for flavour development, and the flavour can be produced in a relatively short period of time without the use of commercial enzyme preparations.

The degree of hydrolysis at which the desired savoury flavour is achieved depends upon the chosen protein substrate and fermentation process parameters, for example, time, temperature and concentration of substrate.

Examples 1 to 6 and 10 to 14 describe preferred modes of putting the invention into practice. Protein sources, strains of bacteria and fermentation conditions which are alternatives to those exemplified will be known to those skilled in the art or can be readily determined. The scope of the invention is not limited by the examples but is defined by the appended claims.

## Claims

1. A method for preparing a savoury-flavoured product from a dairy or vegetable source of protein **characterised in that** it comprises:
fermenting said source of protein in a physiologically acceptable aqueous medium containing at least one first food grade strain of bacterium selected from the genus *Macrococcus,* and at least one second food grade strain of lactic acid bacterium at a temperature of from 20-42°C at a pH maintained in excess of the isoelectric point of said medium,
continuing said fermention until a sufficient degree of hydrolysis has been reached so that said savoury flavour has been achieved and recovering the product so produced, with the proviso that isolated casein or a derivative thereof is not the sole source of protein.

2. A method as claimed in claim 1 wherein said *Macrococcus* strain is a strain of *Macrococcus caseolyticus.*

3. A method as claimed in claim 2 wherein said strain of *Macrococcus caseolyticus* is either of the strains deposited in the American Type Culture Collection under ATCC#51834 and ATCC#51835.

4. A method as claimed in any one of the preceding claims wherein said second strain is selected from the group consisting of a strain of *Lactobaccillus,* a strain of *Lactococcus,* a strain of *Pediococcus,* and a strain of *Leuconostoc* bacteria.

5. A method as claimed in claim 4 wherein said second strain is selected from the group consisting of a strain of *L. helveticus,* a strain of *L. delbrueckii* subsp. *bulgaricus,* a strain of *L. delbrueckii* subsp. *lactis,* a strain of *L. brevis,* a strain of *L. paracaseii,* a strain of *L. rhamnosus* and a strain of *L. fermentum.*

6. A method as claimed in claim 4 wherein said second strain is a strain of *Lactobacillus Lelveticus.*

7. A method as claimed in any one of the preceding claims wherein said sufficient degree of hydrolysis is from 2% to 32%.

8. A method as claimed in any one of the preceding claims wherein said source of protein is a milk and/or a milk derivative.

9. A method as claimed in claim 8 wherein said milk is selected from the group consisting of whole milk, homogenised whole milk, skim milk, reconstituted skim milk powder and reconstituted whole milk powder.

10. A method as claimed in claim 8 wherein said milk derivative is selected from the group consisting of milk protein concentrate (MPC), whey protein concentrate (WPC), calcium-depleted milk derivatives, buttermilk, whey and ultrafiltration permeates.

11. A method as claimed in any one of claims 1 to 7 wherein said source of protein is vegetable or cereal protein.

12. A method as claimed in any one of the preceding claims wherein said physiologically acceptable medium contains added or native carbohydrate.

13. A method as claimed in any one of the preceding claims wherein said medium contains cream, cream powder or butter fat.

14. A method as claimed in any one of claims 1 to 12 wherein said medium contains a non-dairy fat.

15. A method as claimed in any one of the preceding claims wherein said fermentation is conducted at a pH of between 4.0 and 8.0.

16. A method as claimed in claim 15 wherein said pH is between 5.5 and 6.5.

17. A method as claimed in any one of the preceding claims wherein said fermentation is conducted at pH stat conditions.

18. A method as claimed in any one of the preceding claims wherein said temperature is between 30°C and 40°C.

19. A method as claimed in any one of the preceding claims wherein said first and second strains of bacteria are added at different times, and the temperature and pH at which the fermentation is conducted may optionally be changed after the second or subsequent strains are added.

20. A method as claimed in claim 1 wherein said fermentation is separated into an acid production and a flavour development stage.

21. A method as claimed in claim 20 wherein the pH is changed during the flavour development stage.

22. A method as claimed in claim 20 or claim 21 wherein the temperature is changed during the flavour development stage.

23. A method as claimed in any one of claims 20 to 22 wherein cells of said strains of bacteria are ruptured to release intracellular enzymes to initiate the flavour development stage.

24. A method as claimed in any one of claims 20 to 22 wherein hydrolytic enzymes are added in said flavour development stage.

25. A method as claimed in any one of the preceding claims wherein said fermentation is terminated before said savoury flavoured product is recovered.

26. A method as claimed in any one of the preceding claims wherein said first and second strains of bacteria are harvested and reinoculated into a fresh medium for a subsequent flavour development fermentation.

27. A method as claimed in any one of the preceding claims wherein said fermentation product is heat-treated to develop desired flavours.

28. A method as claimed in any one of the preceding claims wherein said fermentation product is blended with other ingredients to produce a final product.

29. A method claimed in any one of the preceding claims which includes the additional step of adding the product recovered from the said process to a cheese making process to provide flavour to the cheese to be produced thereby.

30. A method claimed in any one of claims 1 to 28 which includes the additional step of adding the product recovered from the said process to a recombined product to provide flavour to the product to be produced thereby.

31. A method as claimed in claim 30 wherein said recombined product is selected from the group consisting of protein-water gels, yoghurts, creams, custards, sauces and confectionary products.

## Patentansprüche

1. Verfahren zum Herstellen eines Produkts mit pikantem Geschmack aus einer Molkereiprodukt-Proteinquelle oder einer pflanzlichen Proteinquelle, **dadurch** charakterisiert, dass sie Folgendes umfasst:
Fermentieren der Proteinquelle in einem physiologisch annehmbaren wässrigen Medium, das mindestens einen ersten Bakterienstamm in Lebensmittelqualität enthält, ausgewählt aus der Gattung *Macrococcus,* und mindestens einen zweiten Stamm in Lebensmittelqualität eines Milchsäurebakteriums, bei einer Temperatur von 20 bis 42°C bei einem pH-Wert, der bei einem Wert konstant gehalten wird, der über dem isoelektrischen Punkt des Mediums liegt,
Fortsetzen der Fermentation bis ein ausreichender Grad an Hydrolyse erreicht worden ist, damit der pikante Geschmack erzielt worden ist, und Gewinnen des auf diese Weise hergestellten Produkts unter der Voraussetzung, dass isoliertes Kasein oder ein Derivat davon nicht die einzige Proteinquelle ist.

2. Verfahren nach Anspruch 1, wobei der *Macrococcus*-Stamm ein Stamm von *Macrococcus caseolyticus* ist.

3. Verfahren nach Anspruch 2, wobei der Stamm von *Macrococcus caseolyticus* einer der Stämme ist, die bei der American Type Culture Collection unter der ATCC-Nr. 51834 und ATCC-Nr. 51835 hinterlegt wurden.

4. Verfahren nach einem der vorangehenden Ansprüche, wobei der zweite Stamm ausgewählt ist aus der Gruppe, bestehend aus einem Stamm von *Lactobacillus-,* einem Stamm von *Lactococcus-,* einem Stamm von *Pediococcus-* und einem Stamm von *Leuconostoc-*Bakterien*.*

5. Verfahren nach Anspruch 4, wobei der zweite Stamm ausgewählt ist aus der Gruppe, bestehend aus einem Stamm von *L. helveticus,* einem Stamm von *L. delbrueckii subsp. bulgaricus,* einem Stamm von *L. delbrueckü subsp. lactis,* einem Stamm von *L. brevis,* einem Stamm von *L. paracaseii,* einem Stamm von *L. rhamnosus* und einem Stamm von *L. fermentum,*

6. Verfahren nach Anspruch 4, wobei der zweite Stamm ein Stamm von *Lactobacillus helveticus* ist.

7. Verfahren nach einem der vorangehenden Ansprüche, wobei der ausreichende Grad an Hydrolyse 2% bis 32 % beträgt.

8. Verfahren nach einem der vorangehenden Ansprüche, wobei die Proteinquelle eine Milch und/oder ein Milchderivat ist.

9. Verfahren nach Anspruch 8, wobei die Milch ausgewählt ist aus der Gruppe, bestehend aus Vollmilch, homogenisierter Vollmilch, Magermilch, rekonstituiertem Magermilchpulver und rekonstituiertem Vollmilchpulver.

10. Verfahren nach Anspruch 8, wobei das Milchderivat ausgewählt ist aus der Gruppe, bestehend aus Milchproteinkonzentrat (MPC), Molkeproteinkonzentrat (WPC), Calcium-depletierten Milchderivaten, Buttermilch, Molke und Ultrafiltrationspermeaten.

11. Verfahren nach einem der Ansprüche 1 bis 7, wobei die Proteinquelle ein pflanzliches Protein oder ein Getreideprotein ist.

12. Verfahren nach einem der vorangehenden Ansprüche, wobei das physiologisch annehmbare Medium ein zugesetztes oder natives Kohlenhydrat enthält.

13. Verfahren nach einem der vorangehenden Ansprüche, wobei das Medium Sahne, Sahnepulver oder Butterfett enthält.

14. Verfahren nach einem der Ansprüche 1 bis 12, wobei das Medium ein Fett enthält, das kein Molkereiproduktfett ist.

15. Verfahren nach einem der vorangehenden Ansprüche, wobei die Fermentation bei einem pH-Wert zwischen 4,0 und 8,0 durchgeführt wird.

16. Verfahren nach Anspruch 15, wobei der pH-Wert zwischen 5,5 und 6,5 liegt.

17. Verfahren nach einem der vorangehenden Ansprüche, wobei die Fermentation unter pH-stat-Bedingungen durchgeführt wird.

18. Verfahren nach einem der vorangehenden Ansprüche, wobei die Temperatur zwischen 30°C und 40°C liegt.

19. Verfahren nach einem der vorangehenden Ansprüche, wobei die ersten und zweiten Bakterienstämme zu verschiedenen Zeiten zugesetzt werden und die Temperatur und der pH-Wert, bei denen die Fermentation durchgeführt wird, wahlweise geändert wird, nachdem der zweite Stamm oder nachfolgende Stämme zugesetzt sind.

20. Verfahren nach Anspruch 1, wobei die Fermentation in eine Stufe der Säureproduktion und eine Stufe der Geschmacksentwicklung getrennt ist.

21. Verfahren nach Anspruch 20, wobei der pH-Wert während der Stufe der Geschmacksentwicklung geändert wird.

22. Verfahren nach Anspruch 20 oder 21, wobei die Temperatur während der Stufe der Geschmacksentwicklung geändert wird.

23. Verfahren nach einem der Ansprüche 20 bis 22, wobei Zellen des Bakterienstamms aufgebrochen werden, um intrazelluläre Enzyme freizusetzen, um die Stufe der Geschmacksentwicklung einzuleiten.

24. Verfahren nach einem der Ansprüche 20 bis 22, wobei hydrolytische Enzyme auf der Stufe der Geschmacksentwicklung zugesetzt werden.

25. Verfahren nach einem der vorangehenden Ansprüche, wobei die Fermentation beendet wird, bevor das Produkt mit pikantem Geschmack gewonnen wird.

26. Verfahren nach einem der vorangehenden Ansprüche, wobei die ersten und zweiten Bakterienstämme geerntet werden und damit ein frisches Medium zu einer nachfolgenden Geschmacksentwicklungsfermentation angeimpft wird.

27. Verfahren nach einem der vorangehenden Ansprüche, wobei das hennentationsprodukt hitzebehandelt wird, um gewünschte Geschmacke zu entwickeln.

28. Verfahren nach einem der vorangehenden Ansprüche, wobei das Fermentationsprodukt mit anderen Inhaltsstoffen gemischt wird, um ein Endprodukt herzustellen.

29. Verfahren nach einem der vorangehenden Ansprüche, welches den zusätzlichen Schritt eines Einführens des Produkts, das aus diesem Verfahren gewonnen wurde, in ein Käseherstellungsverfahren einschließt, um dem Käse, der auf diese Weise hergestellt werden soll, Geschmack zu verleihen.

30. Verfahren nach einem der Ansprüche 1 bis 28, das den zusätzlichen Schritt eines Zugebens des Produkts, das aus diesem Verfahren gewonnen wurde, zu einem rekombinierten Produkt einschließt, um dem Produkt, das auf diese Weise hergestellt werden soll, Geschmack zu verleihen.

31. Verfahren nach Anspruch 30, wobei das rekombinierte Produkt ausgewählt ist aus der Gruppe, bestehend aus Protein/Wasser-Gelen, Joghurts, Cremes, Vanillecremes, Soßen und Süßwarenprodukten.

## Revendications

1. Procédé pour la préparation d'un produit de goût salé à partir d'une source laitière ou végétale de protéine, **caractérisé en ce qu'**il comprend :
la fermentation de ladite source de protéine dans un milieu aqueux physiologiquement acceptable contenant au moins une première souche de qualité alimentaire de bactérie choisie dans le genre *Macrococcus*, et au moins une seconde souche de qualité alimentaire de bactérie lactique à une température de 20 à 42°C et à un pH maintenu à une valeur supérieure au point isoélectrique dudit milieu ;
le maintien de ladite fermentation jusqu'à ce qu'un degré d'hydrolyse suffisant ait été atteint afin que ledit goût salé soit obtenu, et la récupération du produit ainsi préparé, sous réserve que la caséine isolée ou un de ses dérivés ne soit pas la seule source de protéine.

2. Procédé suivant la revendication 1, dans lequel ladite souche de *Macrococcus* est une souche de *Macrocoocus caseolyticus.*

3. Procédé suivant la revendication 2, dans lequel ladite souche de *Macrococcus caseolyticus* est une des souches déposées dans l'American Type Culture Collection sous les références ATCC n° 51834 et ATCC n° 51335.

4. Procédé suivant l'une quelconque des revendications précédentes, dans lequel ladite seconde souche est choisie dans le groupe consistant en une souche de *Lactobacillus,* une souche de *Lactococcus*, une souche de *Pediococcus* et une souche de bactéries *Leuconostoc*.

5. Procédé suivant la revendication 4, dans lequel ladite seconde souche est choisie dans le groupe consistant en une souche de *L. helveticus,* une souche de *L*. *delbrueckii* sous-espèce *bulgaricus,* une souche de *L. delbrueckii* sous-espèce *lactis,* une souche de *L. brevis*, une souche de *L. paracaseii,* une souche de *L. rhamnosus* et une souche de *L. fermentum.*

6. Procédé suivant la revendication 4, dans lequel ladite seconde souche est une souche de *Lactobacillus helveticus*.

7. Procédé suivant l'une quelconque des revendications précédentes, dans lequel ledit degré suffisant d'hydrolyse est de 2 % à 32 %.

8. Procédé suivant l'une quelconque des revendications précédentes, dans lequel ladite source de protéine est un lait et/ou dérivé du lait.

9. Procédé suivant la revendication 8, dans lequel ledit lait est choisi dans le groupe consistant en lait entier, lait entier homogénéisé, lait écrémé, poudre de lait écrémé reconstitué et poudre de lait entier reconstitué.

10. Procédé suivant la revendication 8, dans lequel ledit dérivé de lait est choisi dans le groupe consistant en un concentré de protéines du lait (MPC), un concentré de protéines du petit-lait (WPC), des dérivés de lait appauvris en calcium, le babeurre, le petit-lait et les perméats d'ultrafiltration.

11. Procédé suivant l'une quelconque des revendications 1 à 7, dans lequel ladite source de protéine est une protéine de légumes ou de céréales.

12. Procédé suivant l'une quelconque des revendications précédentes, dans lequel ledit milieu physiologiquement acceptable contient un glucide ajouté ou naturel.

13. Procédé suivant l'une quelconque des revendications précédentes, dans lequel ledit milieu contient de la crème, de la crème en poudre ou de la matière grasse butyrique.

14. Procédé suivant l'une quelconque des revendications 1 à 12, dans lequel ledit milieu contient une matière grasse non laitière.

15. Procédé suivant l'une quelconque des revendications précédentes, dans lequel ladite fermentation est effectuée à un pH entre 4,0 et 8,0.

16. Procédé suivant la revendication 15, dans lequel ledit pH est entre 5,5 et 6,5.

17. Procédé suivant l'une quelconque des revendications précédentes, dans lequel ladite fermentation est effectuée dans des conditions statiques de pH.

18. Procédé suivant l'une quelconque des revendications précédentes, dans lequel ladite température est comprise entre 30°C et 40°C.

19. Procédé suivant l'une quelconque des revendications précédentes, dans lequel lesdites première et seconde souches de bactéries sont ajoutées à des temps différents, et la température et le pH auxquels la fermentation est effectuée peuvent éventuellement être modifiée après addition de la deuxième souche ou des souches suivantes.

20. Procédé suivant la revendication 1, dans lequel ladite fermentation est séparée en une étape de production d'acide et une étape de développement d'arôme.

21. Procédé suivant la revendication 20, dans lequel le pH est modifié au cours de l'étape de développement d'arôme.

22. Procédé suivant la revendication 20 ou la revendication 21, dans lequel la température est modifiée au cours de l'étape de développement d'arôme.

23. Procédé suivant l'une quelconque des revendications 20 à 22, dans lequel les cellules desdites souches de bactéries sont rompues pour libérer les enzymes intracellulaires afin de déclencher l'étape de développement d'arôme.

24. Procédé suivant l'une quelconque des revendications 20 à 22, dans lequel des enzymes hydrolytiques sont ajoutées dans ladite étape de développement d'arôme.

25. Procédé suivant l'une quelconque des revendications précédentes, dans lequel ladite fermentation est interrompue avant de recueillir ledit produit de goût salé.

26. Procédé suivant l'une quelconque des revendications précédentes, dans lequel lesdites première et seconde souches de bactéries sont recueillies et réintroduites dans un milieu frais pour une fermentation ultérieure à des fins de développement d'arôme.

27. Procédé suivant l'une quelconque des revendications précédentes, dans lequel ledit produit de fermentation est soumis à un traitement thermique pour développer les arômes désirés.

28. Procédé suivant l'une quelconque des revendications précédentes, dans lequel ledit produit de fermentation est mélangé à d'autres ingrédients pour préparer un produit final.

29. Procédé suivant l'une quelconque des revendications précédentes, qui comprend l'étape supplémentaire d'addition du produit recueilli à partir dudit procédé à un procédé de préparation de fromage pour former un arôme au fromage à préparer ainsi.

30. Procédé suivant l'une quelconque des revendications 1 à 28, qui comprend l'étape supplémentaire d'addition du produit recueilli à partir dudit procédé à un produit recombiné pour fournir un arôme au produit à préparer ainsi,

31. Procédé suivant la revendication 30, dans lequel ledit produit recombiné est choisi dans le groupe consistant en des gels aqueux à base de protéines, des yaourts, des crèmes, des crèmes anglaises, des sauces et des produits de confiserie.
